# EUROPEAN PATENT APPLICATION

(11) **EP 4 099 775 A1**
(43) Date of publication of application: **07.12.2022**
(21) Application number: 20916417.7
(22) Date of filing: 29.01.2020
(51) Int. Cl.: H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: KUMAGAI, Shinya, Tokyo 100-6150 (JP); HARADA, Hiroki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2020/003197
(87) International publication number: WO 2021/152728

(57) **Abstract**

A terminal according to an aspect of the present disclosure includes a receiving section that receives a minimum information block (MIB) in a synchronization signal block, and a control section that determines control resource set (CORESET) 0, based on configuration information associated with an index in the MIB among a set of pieces of configuration information for CORESETO, wherein a value of at least one of the set, the index, and a frequency resource of the CORESETO is different from a value for a second terminal, the second terminal having a minimum channel bandwidth wider than a minimum channel bandwidth of the terminal. According to an aspect of the present disclosure, an initial access can be appropriately performed even in a case that a required condition for a terminal is reduced.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G plus (+)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15, a bandwidth required at least for a UE to perform communication (for example, mandatory BW) and the like is defined. On the other hand, in future radio communication systems (for example, Rel. 17 or later versions), it is assumed that a terminal supporting various uses cases for IoT and the like is introduced.

It is also considered that, depending on the use case, required conditions defined in Rel. 15 (for example, UE capability or terminal capability) is not necessarily required. For this reason, it is also considered that the required conditions are reduced depending on the use case, but how to control configurations of the required conditions or UE operations in the required conditions is still not sufficiently studied. To be flexibly supporting the various use cases in the future radio communication systems, the required conditions, the UE operations, or the like need to be appropriately controlled.

However, how a terminal having the reduced required conditions perform an initial access is not clear. Unless the initial access is performed appropriately, a system performance reduction such as throughput reduction may occur.

In view of these, an object of the present disclosure is to provide a terminal, a radio communication method, and a base station capable of appropriately performing an initial access even in a case that a required condition for the terminal is reduced.

### Solution to Problem

A terminal according to an aspect of the present disclosure includes a receiving section that receives a minimum information block (MIB) in a synchronization signal block, and a control section that determines control resource set (CORESET) 0, based on configuration information associated with an index in the MIB among a set of pieces of configuration information for CORESETO, wherein a value of at least one of the set, the index, and a frequency resource of the CORESETO is different from a value for a second terminal, the second terminal having a minimum channel bandwidth wider than a minimum channel bandwidth of the terminal.

### Advantageous Effects of Invention

According to an aspect of the present disclosure, an initial access can be appropriately performed even in a case that a required condition for a terminal is reduced.

### Brief Description of Drawings

FIGS. 1A to 1C are diagrams to illustrate examples of an SSB and a CORESETO multiplexing pattern;
FIG. 2 is a diagram to illustrate an example of a CORESETO configuration table;
FIG. 3 is a diagram to illustrate an example of an SSB and CORESETO;
FIG. 4 is a diagram to illustrate an example of an existing table according to Embodiment 1-1;
FIG. 5 is a diagram to illustrate an example of a new table according to Embodiment 1-1;
FIG. 6 is a diagram to illustrate an example of CORESETO according to Embodiment 1-1;
FIG. 7 is a diagram to illustrate an example of a new table according to Embodiment 1-2;
FIG. 8 is a diagram to illustrate an example of CORESETO according to Embodiment 1-2;
FIG. 9 is a diagram to illustrate an example of a new table according to Embodiment 2;
FIG. 10 is a diagram to illustrate an example of CORESETO according to Embodiment 3-1;
FIGS. 11A and 11B are diagrams to illustrate examples of CORESETO according to Embodiment 3-2;
FIG. 12 is a diagram to illustrate an example of a schematic structure of a radio communication system according to one embodiment;
FIG. 13 is a diagram to illustrate an example of a structure of a base station according to one embodiment;
FIG. 14 is a diagram to illustrate an example of a structure of a user terminal according to one embodiment; and
FIG. 15 is a diagram to illustrate an example of a hardware structure of the base station and the user terminal according to one embodiment.

### Description of Embodiments

### <Use Cases>

In future radio communication systems (for example, 3GPP Rel. 17 or later versions), it is assumed that a communication system introduced in NR (for example, Rel. 15) is used for a use case for IoT or the like. Examples of the use case for IoT include smart home, smart water, power meter, and smart signal, which are known use cases for IoT (for example, using an LTE terminal), and additionally, an application to a new use case is under study.

Examples of the new use case may include an industry wireless sensor NW (IWSN), a video surveillance system, a wearable device, and the like.

Conditions or capabilities required for terminals (for example, terminal capabilities, UE capabilities or required conditions) applied to these use cases are assumed to be reduced (mitigated) compared to conditions or capabilities required for devices defined or supported in Rel. 15 (also referred to as NR devices, NR terminals, for example). The device reduced in the terminal capability compared to the NR device may be referred to as a capability reduced NR device, a reduced capability NR device, an NR light device, an NR light terminal, an NR light, an NR light UE, and the like. In the following descriptions, the device reduced in the terminal capability compared to the NR device is referred to as the NR light device, but may be interpreted with other names.

The NR light device may be configured to include transmitting antennas and receiving antennas, the number of transmitting antennas and the number of receiving antennas being less than those of the NR device. The NR light device may be configured to have a bandwidth used for communication smaller or narrower than that of the NR device (Bandwidth reduction).

In Rel. 15, a UE (NR device, existing UE) is required to support a given bandwidth depending on a frequency range (for example, FR1, FR2) and a subcarrier spacing. The bandwidth required for the UE to support may be referred to as a mandatory bandwidth or a mandatory BW.

For example, in a first frequency range (FR1), the UE is required to support a bandwidth of approximately 100 MHz for the subcarrier spacings of 30 KHz and 60 KHz, and a bandwidth of approximately 50 MHz for the subcarrier spacing of 15 KHz. In a second frequency range (FR2), the UE is required to support a bandwidth of approximately 200 MHz for the subcarrier spacings of 60 KHz and 120 KHz.

Meanwhile, a bandwidth supported by the NR light device (for example, mandatory bandwidth) may be configured to be narrower than the bandwidth supported by the UE in Rel. 15. In other words, a size of the bandwidth supported by the NR light device may be smaller than that of the NR device. This can reduce a load on reception processing or transmission processing of signals in the NR light device.

In order to reduce complexity of the NR light device, the followings are under study.
- Reduction of the number of antennas for at least one of UE reception and transmission.
- Reduction of the UE bandwidth. Synchronization signal (SS)/physical broadcast channel (PBCH) block (synchronization signal block (SSB)) bandwidth in Rel. 15 is reused, and change of layer 1 (L1) is minimized.
- Half duplex frequency division duplex (FDD).
- Reduced UE processing time.
- Reduce UE processing capability.

Furthermore, it is studied that these are not to overlap a low power wide area (LPWA) use case, the lowest capability is not lower than an LTE Category 1bis modem, coexistence with Rel-15 UE and Rel-16 UE is ensured, a stand alone mode and single connectivity are discussed with an emphasis, and so on.

### <Multiplexing Patterns>

In Rel. 15 NR, multiplexing patterns 1 to 3 for an SSB and control resource set (CORESET) 0 (zero) are defined. CORESETO, a CORESET for a PDCCH scheduling a PDSCH carrying system information block (SIB) 1, a CORESET for a type0-PDCCH common search space (CSS) set, and a remaining minimum system information (RMSI) CORESET may be interchangeably interpreted.

### [Multiplexing Pattern 1]

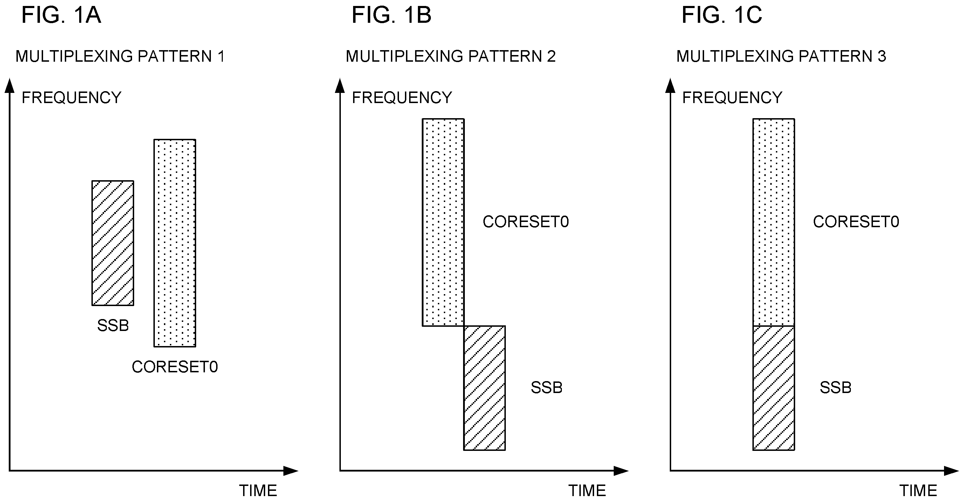

An SSB and 0 are time division multiplexed (TDMed) (FIG. 1A). In other words, time resources (periods) of the SSB and CORESETO do not overlap each other (SSB and CORESETO are mapped to different times), and frequency resources (bands) of the SSB and CORESETO overlap each other.

For example, in a case that the SSB and CORESETO cannot be frequency division multiplexed (FDMed) in a band having a narrow channel bandwidth, it is effective to TDM the SSB and CORESETO. In a case that a plurality of beams can be transmitted at the same frequency and at the same time by digital beamforming in a low frequency band (e.g., frequency range (FR) 1, 6 GHz or less), FDM with the same beam is not necessary.

### [Multiplexing Pattern 2]

The SSB and CORESETO are TDMed and FDMed (FIG. 1B). In other words, the time resources of the SSB and CORESETO do not overlap each other (the SSB and CORESETO are mapped to different times), and the frequency resources of the SSB and CORESETO do not overlap each other (the SSB and CORESETO are mapped to different frequencies).

For example, in a case that an SSB SCS (subcarrier spacing (SCS) of SSB) is different from a CORESETO SCS (PDCCH SCS), particularly, in a case that the SSB SCS is wider than an RMSI SCS, a time length of the SSB (symbol length) is shorter, and thus, neither CORESETO nor the PDSCH may be FDMed with the SSB. In this case, the SSB and CORESETO can be multiplexed on the different time resources and the different frequency resources.

The base station can transmit only one beam under a restriction of using analog beamforming. The base station can transmit one beam in a short time to suppress an overhead for beam sweeping by FDMing the PDSCH carrying SIB1 with the SSB.

### [Multiplexing Pattern 3]

The SSB and CORESETO are FDMed (FIG. 1C). In other words, the time resources of the SSB and CORESETO overlap each other, and the frequency resources of the SSB and CORESETO do not overlap each other (the SSB and CORESETO are mapped to different frequencies).

For example, the base station can transmit one beam in a short time by FDMing both CORESETO and the PDSCH with the SSB. The base station can suppress an overhead for beam sweeping by switching the beam per SSB.

### <CORESET0>

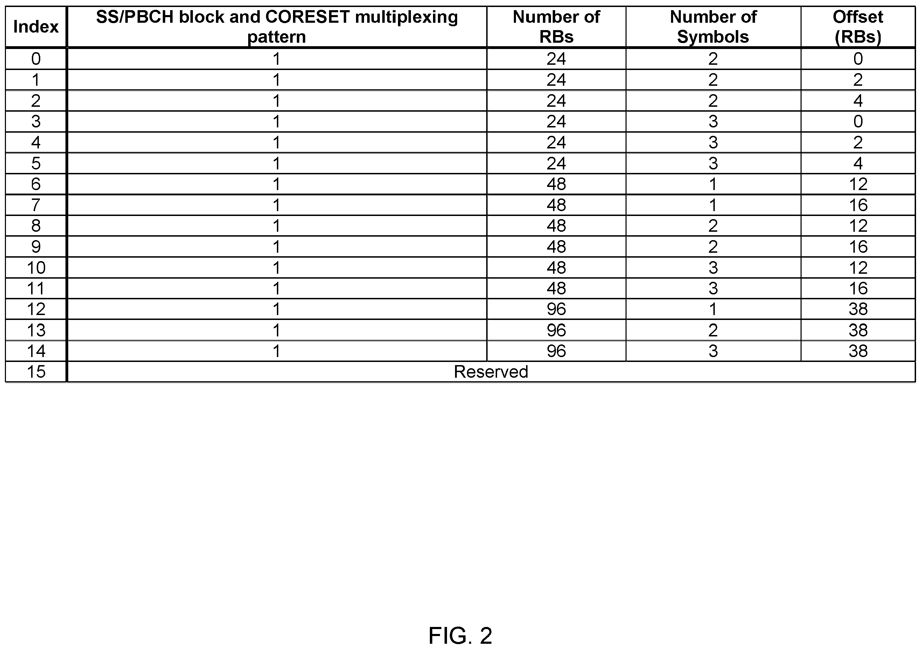

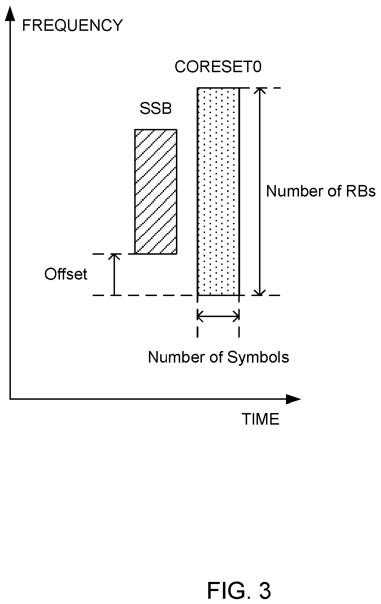

In Rel. 15 NR, a plurality of CORESETO configuration tables (a plurality of CORESETO configuration information sets) for a configuration of CORESETO are defined in the specification. Each of the tables (the CORESETO configuration information sets) includes a plurality of rows (a plurality of pieces of CORESETO configuration information) (FIG. 2). Each of the rows includes at least one parameter (column) of a row index, an SS/PBCH block and CORESET multiplexing pattern, the number of resource blocks (RBs) of CORESETO, the number of symbols of CORESETO, and an offset with respect to the smallest RB index of CORESETO to the smallest RB index of the SSB (the smallest RB index of the common RB overlapping an initial index of the SSB) (FIG. 3).

In the present disclosure, a CORESETO configuration information set and a CORESETO configuration table may be interchangeably interpreted. In the present disclosure, CORESETO configuration information and a row of a CORESETO configuration table may be interchangeably interpreted.

The plurality of CORESETO configuration tables are associated with at least one of the SSB SCS, the PDCCH (CORESETO) SCS, and the (SSB) frequency band. The frequency band may be associated with a minimum channel bandwidth. The UE determines a CORESETO configuration table associated with at least one of the SSB SCS, the PDCCH SCS, and the frequency band from the plurality of CORESETO configuration tables.

A minimum information block (MIB) carried by a PBCH in the SSB includes PDCCH configuration information for SIB1 (pdcch-ConfigSIB1) for a configuration of a PDCCH for SIB1. The PDCCH configuration information for SIB1 includes a CORESETO configuration index (controlResoureSetZero) for the configuration of CORESETO, and a search space 0 configuration index (searchSpaceZero) for a configuration of type0-PDCCH CSS set (search space 0). The CORESETO configuration index corresponds to the row index of the CORESETO configuration table (for example, one of 0, 1, ..., 15) .

The UE uses a row having an index indicated in the CORESETO configuration index from the determined CORESETO configuration table to determine CORESETO.

In Rel. 15, a bandwidth of CORESETO is not limited to a bandwidth of the SSB. For bandwidth reduction, a new UE may fail to receive a signal wider than the SSB bandwidth. In a case that CORESETO is configured by the CORESETO configuration index in the PDCCH configuration information for SIB1 included in the MIB, coexistence of the Rel-15 UE and the Rel-16 UE (existing UE) with the NR light device (new UE) should be ensured.

Then, the inventors of the present invention came up with the idea of appropriately configuring CORESETO for a new UE.

Hereinafter, embodiments according to the present disclosure will be described in detail with reference to the drawings. Radio communication methods according to respective embodiments may each be employed individually, or may be employed in combination.

In the present disclosure, CORESETO, a CORESET having index 0, DCI including CRC scrambled by an SI-RNTI and including a system information indicator set to 0, a PDCCH for scheduling SIB1, a CORESET associated with an SSB, a PDCCH in CORESETO, a Type0-PDCCH, an RMSI CORESET, and an RMSI PDCCH may be interchangeably interpreted.

### (Radio Communication Method)

In the present disclosure, an existing CORESETO configuration table, an existing table, and CORESETO configuration tables in Rel. 15 and Rel. 16 may be interchangeably interpreted. In the present disclosure, a new CORESETO configuration table, a new table, and a CORESETO configuration table in Rel. 17 or later versions may be interchangeably interpreted.

In the present disclosure, a minimum bandwidth, a minimum channel bandwidth, a minimum UE channel bandwidth, a mandatory bandwidth, and a mandatory BW may be interchangeably interpreted.

In the present disclosure, an existing UE, a UE having a minimum channel bandwidth wider than a minimum channel bandwidth for a new UE, a second terminal, and an NR device may be interchangeably interpreted. In the present disclosure, a new UE, a UE having a minimum channel bandwidth narrower than a minimum channel bandwidth for an existing UE, a first terminal, capability reduced NR device, a reduced capability NR device, an NR light device, an NR light terminal, an NR light, and an NR light UE may be interchangeably interpreted.

Different types or categories of a UE using reduced capability may be introduced. The different types or categories of the UE using reduced capability may have different capabilities for a supported bandwidth for CORESETO.

A value of at least one of the CORESETO configuration table for the new UE, the CORESETO configuration index notified to the new UE, and the frequency resource of CORESETO for the new UE (for example, bandwidth, RB index) may be different from a value (specific value) for the existing UE.

CORESETO for the new UE may be different from CORESETO for the existing UE.

### <Embodiment 1>

Different CORESETO may be configured for each of the existing UE and the new UE by the CORESETO configuration index in the PDCCH configuration information for SIB1 included in the MIB.

CORESETO may be determined using one of Embodiments 1-1 and 1-2 below.

### <<Embodiment 1-1>>

The CORESETO configuration tables different between the existing UE and the new UE may be used.

The existing UE may use an existing table (table #1). The new UE may use a new table (table #2). A value of at least one parameter (row) associated with the CORESETO configuration index in the new table may be different from a value of at least one parameter (row) associated with the index in the existing table.

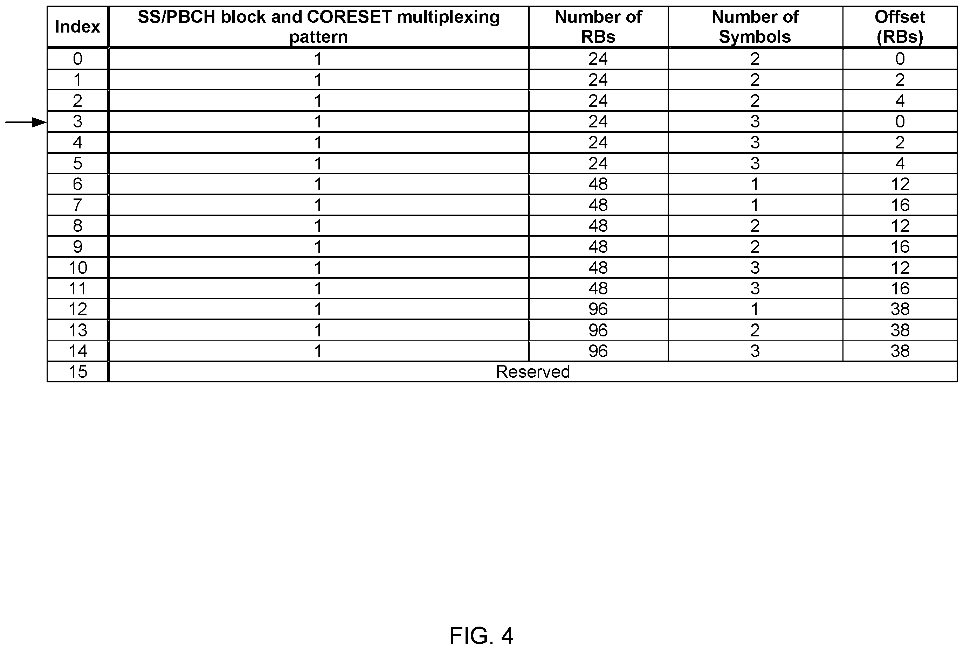

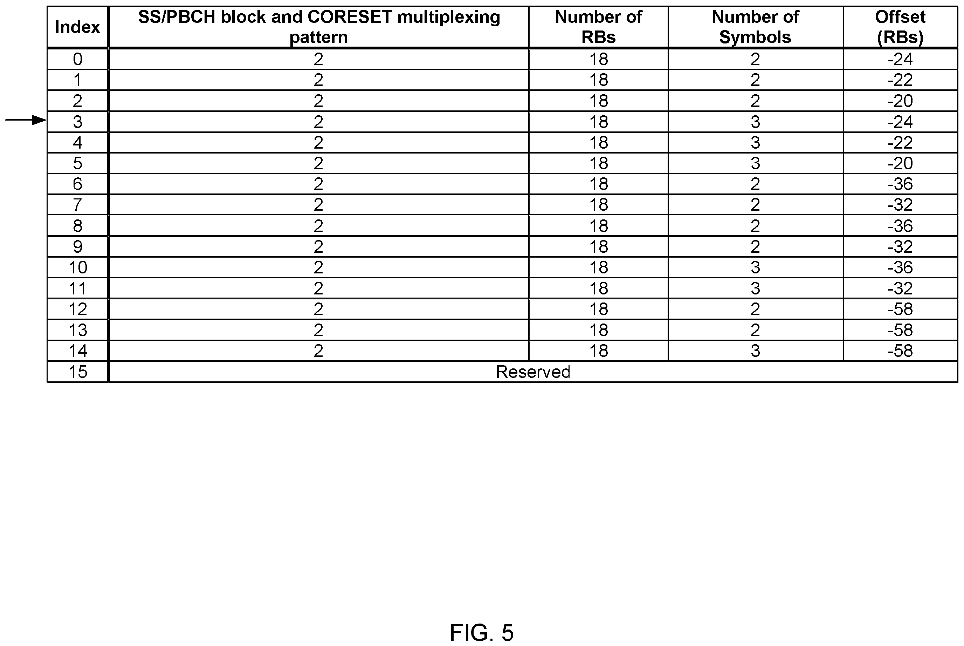

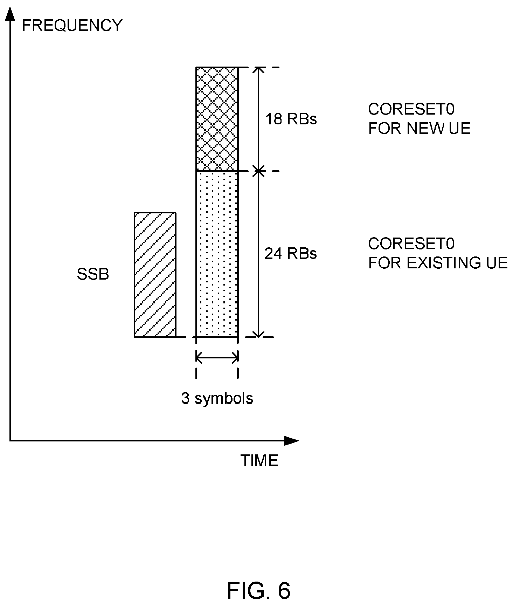

FIG. 4 is a diagram to illustrate an example of an existing table according to Embodiment 1-1. FIG. 5 is a diagram to illustrate an example of a new table according to Embodiment 1-1. In a case that the CORESETO configuration index indicates 3, the multiplexing pattern, the number of RBs, and the offset of CORESETO for the new UE are different from the multiplexing pattern, the number of RBs, and the offset for the existing UE. For example, in the case that the CORESETO configuration index indicates 3, the multiplexing pattern of CORESETO for the existing UE based on the existing table in FIG. 4 is 1 as illustrated in FIG. 6. For example, in the case that the CORESETO configuration index indicates 3, the multiplexing pattern of CORESETO for the new UE based on the new table in FIG. 5 is 2 as illustrated in FIG. 6, and CORESETO for the new UE is mapped to a frequency different from CORESETO for the existing UE.

The bandwidth (the number of RBs) of the CORESETO for the new UE may be equal to or less than the bandwidth of the SSB (the number of RBs, for example, 20 RBs).

### <<Embodiment 1-2>>

The same CORESETO configuration table may be used between the existing UE and the new UE.

The existing UE and the new UE may use a new table (table #1a) including information of the existing table. A value of the CORESETO configuration index notified to (configured for) the new UE may be different from a value of the CORESETO configuration index notified to (configured for) the existing UE.

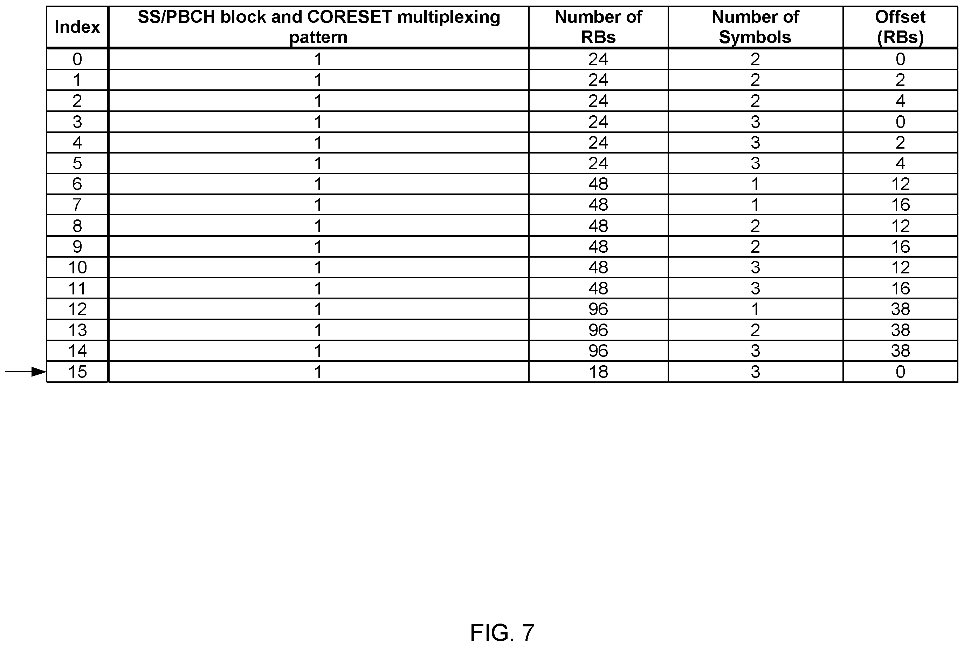

The existing UE and the new UE may use a new table including the row of the existing table. FIG. 7 is a diagram to illustrate an example of a new table according to Embodiment 1-2. In the new table, rows corresponding to indices of values (for example, any of 0, 1, ..., 14) other than a reserved value may be the same as rows in the existing table. In the new table, effective values of parameters may be defined in a row corresponding to an index of a reserved value (for example, 15) in the existing table.

The CORESETO configuration index notified to the existing UE may have a value (for example, any of 0, 1, ..., 14) other than the reserved value. The CORESETO configuration index notified to the new UE may have the reserved value (for example, 15).

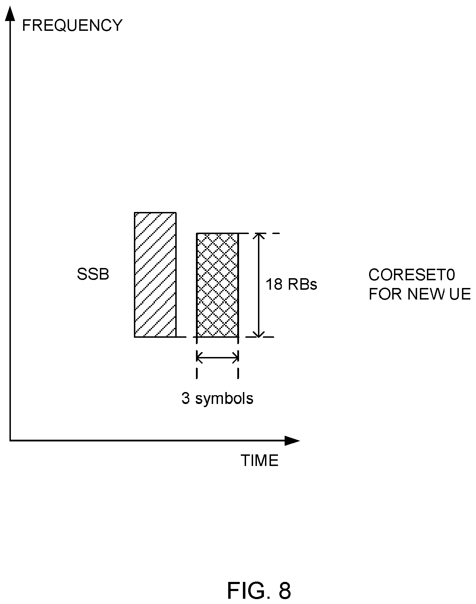

For example, in a case that the CORESETO configuration index is 15, CORESETO based on the new table in FIG. 7 is narrower than the bandwidth of CORESETO for the existing UE as illustrated in FIG. 8.

The bandwidth (the number of RBs) of CORESETO for the new UE may be equal to or less than the bandwidth of the SSB (the number of RBs, for example, 20 RBs).

Interpretation for the parameter in the new table by the new UE may be different from interpretation by the existing UE. For example, the new UE may configure the bandwidth (the number of RBs) of CORESETO equal to or less than the bandwidth (the number of RBs, for example, 20 RBs) of the SSB independently from the parameter in the new table. For example, the new UE may use "offset - the number of RBs" as a new offset. For example, the new UE may use "max{2, the number of symbols}" as the new number of symbols.

In a case that the existing UE is not expected to be present in a network, the reserved value of the index may be notified to the new UE.

According to Embodiment 1 described above, appropriate CORESETO can be configured for the new UE without affecting the operation of the existing UE.

### <Embodiment 2>

The UE may use a new table for CORESETO configuration in a case of being notified by one bit in the MIB.

A spare bit in the MIB may indicate the CORESETO configuration table. For example, in a case that the spare bit is 0, the existing UE may use table #1, and the new UE may use table 2. In the case that the spare bit is 0, the UE may use table #1. In a case that the spare bit is 1, the UE may use a new table (table #3).

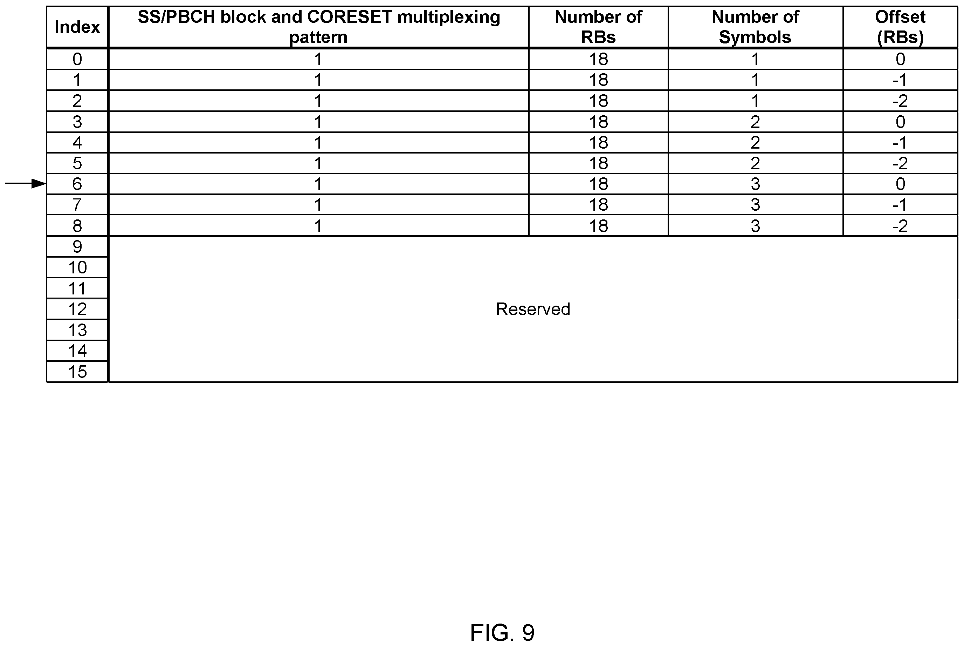

FIG. 9 is a diagram to illustrate an example of the new table (table #3) according to Embodiment 2. For example, in a case that the CORESETO configuration index is 6, CORESETO is the same as in FIG. 8 above.

According to Embodiment 2 described above, appropriate CORESETO can be configured for the new UE without affecting the operation of the existing UE. In the case that the existing UE is not expected to be present in the network, a more flexible CORESETO configuration can be achieved.

### <Embodiment 3>

The existing UE and the new UE may use the same CORESETO configuration table (the existing table or the new table).

### <<Embodiment 3-1>>

The existing UE and the new UE may use the same CORESETO. The existing UE and the new UE may use the same interpretation for a frequency domain resource of CORESETO in the CORESETO configuration table. For example, the frequency domain resource may be the number of RBs.

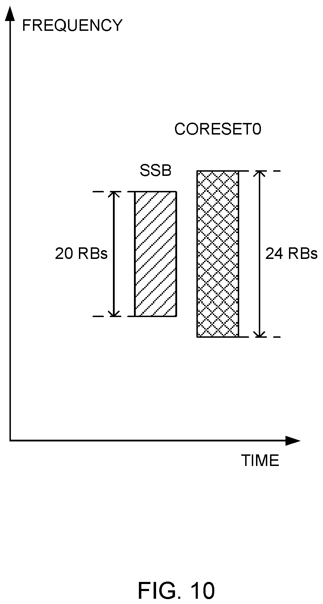

The minimum bandwidth of the new UE may be 24 RBs. It may be mandatory for the new UE to support the bandwidth of 24 RBs. The same CORESETO may be used by the existing UE and the new UE. For example, the existing UE and the new UE may use CORESETO as illustrated in FIG. 10.

When the network supports the existing UE and supports the new UE, or when the network does not support the existing UE and supports the new UE, the bandwidth of CORESETO may be based on the bandwidth supported by the new UE.

The new UE may conform to either operation 1 or operation 2 below.

### [Operation 1]

When the bandwidth of the CORESETO in a cell exceeds capabilities of some new UEs, the new UEs may not necessarily be allowed to access the cell (access control). Otherwise, the new UEs may be allowed to access the cell.

### [Operation 2]

The new UE may not necessarily expect to be configured with CORESETO having the bandwidth exceeding the capability of the UE itself.

According to Embodiment 3-1 described above, the operation of the UE can be simplified.

### <<Embodiment 3-2>>

The existing UE and the new UE may use different interpretations for a frequency domain resource of CORESETO in the CORESETO configuration table. For example, the frequency domain resource may be the number of RBs.

The configuration and monitoring of CORESETO for the existing UE may be the same as those in Rel. 15. A frequency domain resource assignment field may be transmitted by DCI format 1_0 having a cyclic redundancy check (CRC) scrambled by a system information (SI)-radio network temporary identifier (RNTI). The frequency domain resource assignment field may be ceil(log₂(N_{RB}^{DL, BWP}(N_{RB}^{DL, BWP} + 1)/2)) bits. N_{RB}^{DL, BWP} may be a size (the number of RBs) of CORESETO.

The bandwidth of CORESETO for the new UE may be fixed to 18, 20, or 24 RBs, or may be the bandwidth of the SSB.

CORESETO for the new UE based on a CORESETO configuration index (row) for a CORESETO configuration table may be part of the CORESETO of the existing UE based on the CORESETO configuration index (row).

A frequency position of CORESETO for the new UE may be any of frequency positions 1 to 3 below.

### [Frequency Position 1]

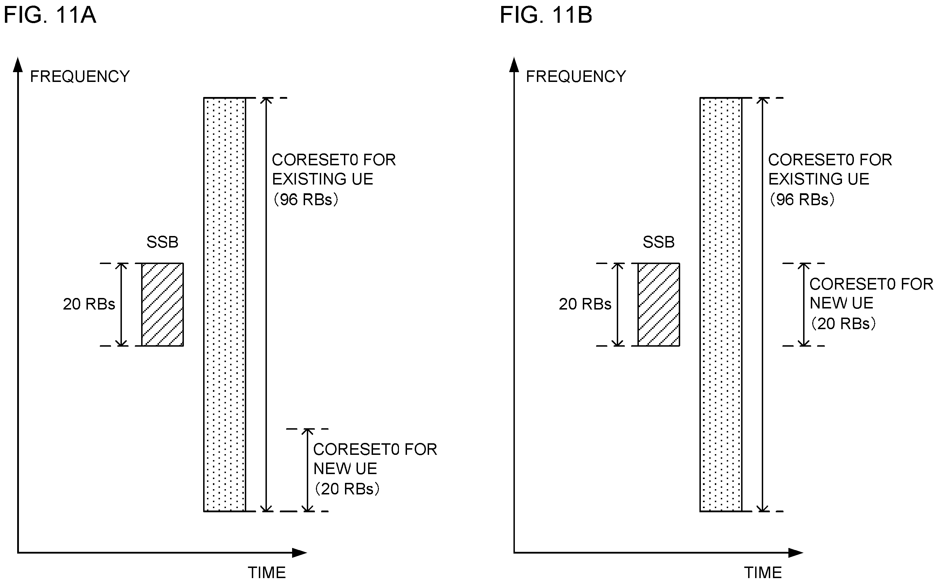

The smallest (start) RB index of CORESETO for the new UE may be the same as the smallest RB index of the CORESET for the existing UE. For example, as illustrated in FIG. 11A, the existing UE uses CORESETO of 96 RBs for the existing UE notified by CORESETO configuration index. The new UE interprets that 20 RBs from the smallest RB index as CORESETO for the new UE. At least one of the multiplexing pattern and the number of symbols may be the same between CORESETO for the existing UE and CORESETO for the new UE.

### [Frequency Position 2]

The largest (end) RB index of CORESETO for the new UE may be the same as the largest RB index of the CORESETO for the existing UE.

### [Frequency Position 3]

The smallest (start) RB index of CORESETO for the new UE may be the same as the smallest RB index of the SSB (the smallest RB index of the common RB overlapping the start index of the SSB). For example, as illustrated in FIG. 11B, the existing UE uses CORESETO of 96 RBs for the existing UE notified by the CORESETO configuration index. The new UE interprets that 20 RBs from the smallest RB index of the SSB as CORESETO for the new UE. At least one of the multiplexing pattern and the number of symbols may be the same between CORESETO for the existing UE and CORESETO for the new UE.

The network may transmit a PDCCH to the new UE by using CORESETO for the new UE in an available PRB.

DCI for the existing UE may be distinguished from DCI for the new UE. For the distinction, either DCI 1 or DCI 2 below may be used.

### [DCI 1]

The frequency domain resource assignment field may be transmitted by DCI format 1_0 having the CRC scrambled by the SI-RNTI. The frequency domain resource assignment field may be ceil(log₂(N_{RB}^{DL, BWP}(N_{RB}^{DL, BWP} + 1)/2)) bits. N_{RB}^{DL, BWP} may be a size (the number of RBs) of CORESETO for the new UE. The size of CORESETO for the new UE may be 18, 20, or 24 RBs.

A size of the frequency domain resource assignment field may be different between the existing UE and the new UE. A DCI size of DCI format 1_0 having the CRC scrambled by the SI-RNTI may be different between the existing UE and the new UE.

A PDCCH for the existing UE may be distinguished from a PDCCH for the new UE by being different in DCI size.

### [DCI 2]

The SI-RNTI for DCI format 1_0 scheduling system information for the new UE may be different from the SI-RNTI for the existing UE, or may be different from other RNTIs. The SI-RNTI for the existing UE may be FFFF. The SI-RNTI for the new UE may be one of reserved values (FFF0 to FFFD).

The PDCCH for the existing UE may be distinguished from the PDCCH for the new UE by being different in SI-RNTI.

According to Embodiment 3-2 described above, the bandwidths of CORESETO and the PDSCH scheduled by CORESETO can be prevented from being restricted by the bandwidth supported by the new UE.

According to Embodiment 3 described above, it is easy to support different types or categories of UE using reduced capability, for a case that the existing UE coexists in the same cell and a case that the existing UE does not coexist in the same cell.

### (Radio Communication System)

Hereinafter, a structure of a radio communication system according to one embodiment of the present disclosure will be described. In this radio communication system, any of the radio communication methods according to the embodiments of the present disclosure described above may be used alone or may be used in combination for communication.

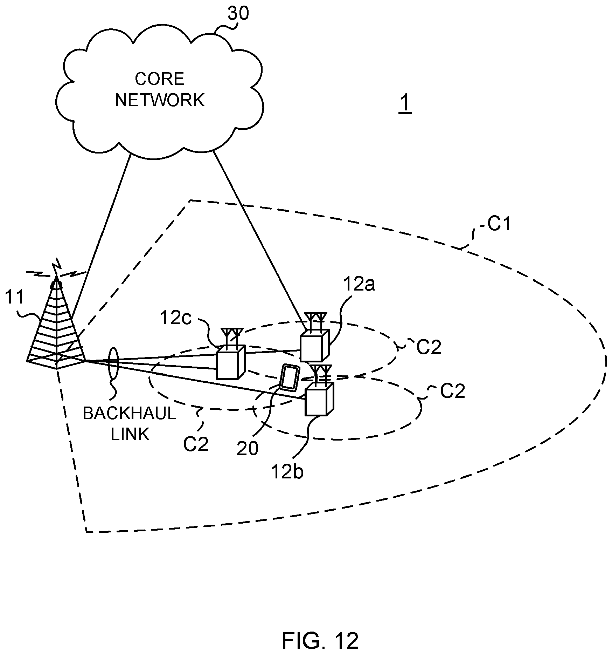

FIG. 12 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 (for example, NR light device) may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UEspecific Reference Signal)."

### (Base Station)

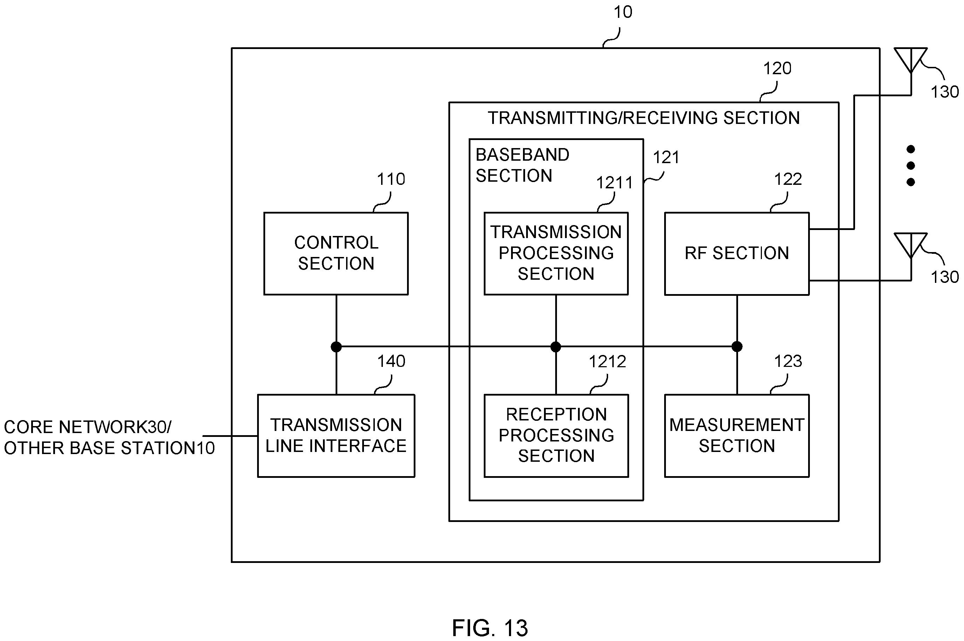

FIG. 13 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a minimum information block (MIB) in a synchronization signal block. The control section 110 may determine control resource set (CORESET) 0, based on configuration information associated with an index in the MIB (for example, CORESETO configuration index) among a set of pieces of configuration information for CORESETO (CORESETO configuration table). A value of at least one of the set and the index may be different from a value for a second terminal, the second terminal having a minimum channel bandwidth wider than a minimum channel bandwidth of the terminal.

### (User Terminal)

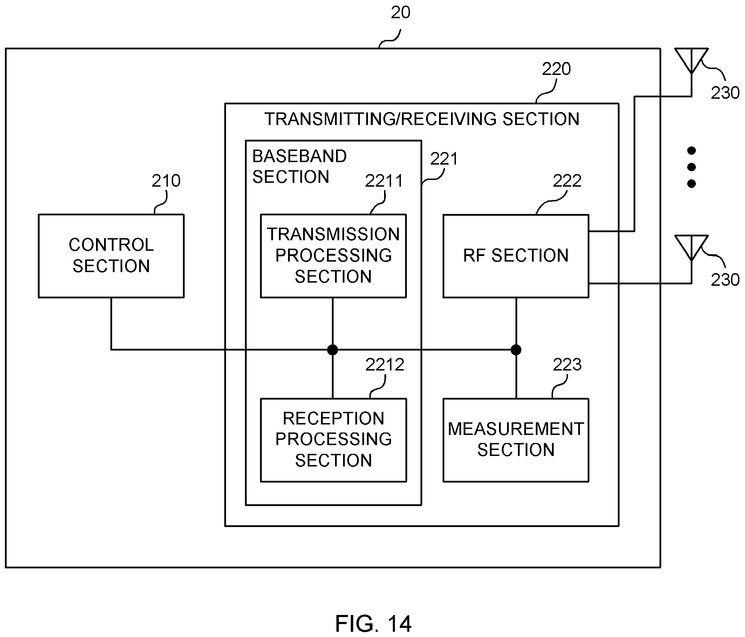

FIG. 14 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a minimum information block (MIB) in a synchronization signal block. The control section 210 may determine control resource set (CORESET) 0, based on configuration information associated with an index in the MIB (for example, CORESETO configuration index) among a set of pieces of configuration information for CORESETO (CORESETO configuration table). A value of at least one of the set and the index may be different from a value for a second terminal, the second terminal having a minimum channel bandwidth wider than a minimum channel bandwidth of the terminal.

The CORESETO may be different from CORESETO for the second terminal.

The set may be one of two sets of pieces of configuration information corresponding to at least one of a subcarrier spacing of the synchronization signal block, a subcarrier spacing of the CORESETO, and a frequency band, the one of the two sets of pieces of configuration information being associated with a bit value in the MIB.

The CORESETO may be part of CORESETO for the second terminal based on the configuration information.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited.

That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

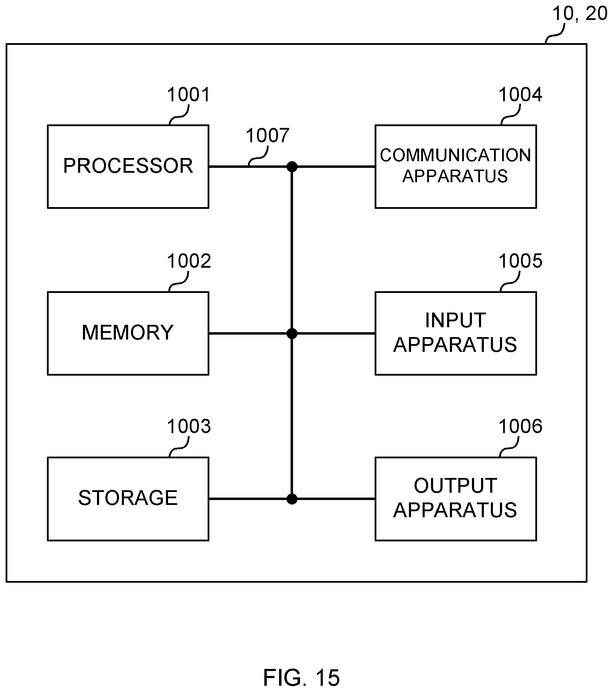

For example, a base station, a user terminal, and so on according to one embodiment of the present disclosure may function as a computer that executes the processes of the radio communication method of the present disclosure. FIG. 15 is a diagram to illustrate an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a minimum information block (MIB) in a synchronization signal block; and
a control section that determines control resource set (CORESET) 0, based on configuration information associated with an index in the MIB among a set of pieces of configuration information for CORESETO, wherein
a value of at least one of the set, the index, and a frequency resource of the CORESETO is different from a value for a second terminal, the second terminal having a minimum channel bandwidth wider than a minimum channel bandwidth of the terminal.

2. The terminal according to claim 1, wherein
the CORESETO is different from CORESETO for the second terminal.

3. The terminal according to claim 1 or 2, wherein
the set is one of two sets of pieces of configuration information corresponding to at least one of a subcarrier spacing of the synchronization signal block, a subcarrier spacing of the CORESETO, and a frequency band, the one of the two sets of pieces of configuration information being associated with a bit value in the MIB.

4. The terminal according to claim 1 or 2, wherein
the CORESETO is part of CORESETO for the second terminal based on the configuration information.

5. A radio communication method of a terminal, the radio communication method comprising:
receiving a minimum information block (MIB) in a synchronization signal block; and
determining control resource set (CORESET) 0, based on configuration information associated with an index in the MIB among a set of pieces of configuration information for CORESETO, wherein
a value of at least one of the set, the index, and a frequency resource of the CORESETO is different from a value for a second terminal, the second terminal having a minimum channel bandwidth wider than a minimum channel bandwidth of the terminal.

6. A base station comprising:
a transmitting section that transmits a minimum information block (MIB) in a synchronization signal block; and
a control section that determines control resource set (CORESET) 0, based on configuration information associated with an index in the MIB among a set of pieces of configuration information for CORESETO, wherein
a value of at least one of the set, the index, and a frequency resource of the CORESETO is different from a value for a second terminal, the second terminal having a minimum channel bandwidth wider than a minimum channel bandwidth of the terminal.
